# EUROPEAN PATENT SPECIFICATION

(11) **EP 2 860 573 B1**
(45) Date of publication and mention of the grant of the patent: **27.12.2017**
(21) Application number: 13800976.6
(22) Date of filing: 23.05.2013
(51) Int. Cl.: G02B 27/22

(54) **OPTICAL IMAGE FORMING DEVICE AND OPTICAL IMAGE FORMING METHOD**
OPTISCHE BILDERZEUGUNGSVORRICHTUNG UND OPTISCHES BILDERZEUGUNGSVERFAHREN
DISPOSITIF FORMANT IMAGE OPTIQUE ET PROCÉDÉ FORMANT IMAGE OPTIQUE

(30) Priority: 07.06.2012 JP 2012130184
(43) Date of publication of application: 15.04.2015
(73) Proprietor: Asukanet Company, Ltd., Hiroshima-shi, Hiroshima 731-0138 (JP)
(72) Inventor: OTSUBO Makoto, Hiroshima-shi Hiroshima 731-0138 (JP)
(74) Representative: Vossius & Partner Patentanwälte Rechtsanwälte mbB
(86) International application number: PCT/JP2013/064372
(87) International publication number: WO 2013/183454

(56) References cited:
- WO-A1-2005/059627
- WO-A1-2009/131128
- WO-A1-2010/131622
- WO-A1-2011/091660
- JP-A- 2007 206 427
- JP-A- 2013 073 204
- US-A1- 2011 181 949
- US-A1- 2013 082 904

## Description

### TECHNICAL FIELD

The present invention relates to an optical imaging apparatus and an optical imaging method using a light-controlling panel including first and second light-controlling members, each of which has numerous band-shaped reflective parts disposed parallel to one another inside a transparent sheet, and which are disposed with their one sides facing each other in such a manner that the respective band-shaped reflective parts cross one another.

### BACKGROUND ART

Generally, when a stereoscopic image is displayed, it is formed behind a display (light-controlling panel), and thus, it is operationally impossible to allow a person to grasp the stereoscopic image. Therefore, a technique for forming an image of an object in front of a light-controlling panel has been proposed, e.g., in Patent Literature 1.

In the technique disclosed in Patent Literature 1, however, a large number of optical imaging elements each including orthogonally disposed reflective surfaces must be aligned side by side regularly, which leads to a drawback in that the manufacture of the apparatus is extremely difficult.
To overcome these drawbacks, the present inventors have proposed an optical imaging apparatus disclosed in Patent Literature 2. The apparatus employs a light-controlling panel including first and second light-controlling members, each of which has a number of band-shaped reflective parts arranged parallel to one another inside a transparent sheet and perpendicular to one side of the transparent sheet, and which are disposed face to face in such a manner that the respective band-shaped reflective parts cross one another.

US 2011/181949 A1 discloses a floating image display device which includes an object and a light reflecting optical member for reflecting displayed light from the object to a viewer. The light reflecting optical member comprises a structure in which micro mirror units each having first and second light reflecting sides are arranged in matrix. The light reflecting optical member reflects the displayed light by the first and second light reflecting sides at two times to form a mirror image. The light reflecting optical member comprises a first assembly and a second assembly. Each of the first and second assemblies is constructed by arranging a plurality of longitudinal members each having one light reflecting side such that all of the light reflecting sides are oriented in a same direction.

WO 2011/091660 A1 discloses a three-dimensional stereoscopic imaging method which includes: longitudinally slicing a three-dimensional scene according to a physical depth of field to produce several two-dimensional layers; respectively displaying each two-dimensional layer on each different two-dimensional display window to form several two-dimensional pictures; polarizing light emitted from the two-dimensional display windows to transmit the light into human eyes, in such a manner that the human eyes are able to perceive the images of all the pictures, and splicing the images of all the two-dimensional pictures into an image of the original three-dimensional scene.

JP 2007 206427 A discloses a display plate capable of inexpensively displaying a display material having a three-dimensional effect.

WO 2005/059627 A1 discloses a display device comprising a luminous element, a laterally structured luminous surface with non-luminous areas and at least one luminescent area, and at least two spaced-apart light-reflecting layers between which light emitted by the luminous surface is reflected back and forth.

### CITATION LIST

### Patent Literature

Patent Literature 1: Japanese Unexamined Patent Application Publication No. Sho 58-21702 (FIG. 8)
Patent Literature 2: Japanese Patent Publication No. 4865088

### SUMMARY OF INVENTION

### Technical Problem

By this light-controlling panel, the manufacture of the apparatus itself is greatly facilitated, and it has become possible to manufacture a large area light-controlling panel having numerous elements. However, in the apparatus, a distance L1 between a real image formed in front of the light-controlling panel and the light-controlling panel is equal to a distance L2 between an object placed behind the light-controlling panel and the light controlling panel. Therefore, when an image is to be formed in front of and at a distance from the light-controlling panel, the object must also be disposed at a distance from the light-controlling panel. For this reason, when a real image is to be formed away from the light-controlling panel, a problem arises in that the apparatus becomes large in size.

The present invention has been made in view of such circumstances, and objects thereof are to provide an optical imaging apparatus and an optical imaging method capable of forming a real image at a distance from a light-controlling panel while achieving downsizing and slimming down of the optical imaging apparatus.

### Solution to Problem

An optical imaging apparatus and an optical imaging method as defined by the independent claims are provided. The dependent claims define embodiments.

An optical imaging apparatus according to the invention for achieving the above objects is an optical imaging apparatus using a light-controlling panel including first and second light-controlling members each having numerous band-shaped reflective parts disposed parallel to one another inside a transparent sheet and perpendicular to one side of the transparent sheet, the first and second light-controlling members being disposed face to face in such a manner that the respective band-shaped reflective parts cross one another, the apparatus comprising: the light-controlling panel; a display unit for displaying an object image and being disposed with a space from the light-controlling panel; a first mirror member disposed behind the light-controlling panel with a constant space therefrom so as to be parallel to the light-controlling panel; and a second mirror member disposed in the space between the display unit and the light-controlling panel and parallel to the first mirror member, wherein light from the object image displayed on the display unit is reflected by the first and second mirror members and the object image is formed in front of the light-controlling panel by means of the light-controlling panel.

Also disclosed is an optical imaging apparatus using a light-controlling panel including first and second light-controlling members each having numerous band-shaped reflective parts disposed parallel to one another inside a transparent sheet and perpendicular to one side of the transparent sheet, the first and second light-controlling members being disposed face to face in such a manner that the respective band-shaped reflective parts cross one another, the apparatus comprising: the light-controlling panel; a display unit for displaying an object image and being disposed in contact with or closely adjacent to one end of the light-controlling panel; and a first mirror member disposed behind the light-controlling panel with a constant space therefrom so as to be parallel to the light-controlling panel, wherein light from the object image displayed on the display unit is reflected by the first mirror member and the object image is formed in front of the light-controlling panel by means of the light-controlling panel.

In the optical imaging apparatus according to the invention, a light-emitting surface of the display unit, a reflective surface of the second mirror member and a light entrance surface of the light-controlling panel may be disposed either in planes each having slightly different angles and heights (e.g., angle difference within ±5 degrees, height difference within, e.g., 1/5 of the distance between the first and second mirror members) or in a same plane. Moreover, the first mirror member and the second mirror member may be formed on both sides of a transparent plate, or may be simply mirrors (including metal reflective surfaces).

In the optical imaging apparatuses according to the invention, the display unit is preferably a light emitting type display. Furthermore, the display unit may be disposed tilted with respect to or parallel to a light entrance surface of the light-controlling panel.

An optical imaging method according to the invention comprises: using a light-controlling panel including first and second light-controlling members each having numerous band-shaped reflective parts disposed parallel to one another inside a transparent sheet and perpendicular to one side of the transparent sheet, the first and second light-controlling members being disposed face to face in such a manner that the respective band-shaped reflective parts cross one another; reflecting an object image displayed on a display unit by first and second mirror members having mirror surfaces on opposing inner sides thereof; and forming the object image in front of the light-controlling panel through the light-controlling panel.

In the optical imaging method according to the invention, a light-emitting surface of the display unit, a reflective surface of the second mirror member, and a light entrance surface of the light-controlling panel may be disposed either in planes each having slightly different angles and heights or in a same plane.
Moreover, also disclosed is an optical imaging method comprises: using a light-controlling panel including first and second light-controlling members each having numerous band-shaped reflective parts disposed parallel to one another inside a transparent sheet and perpendicular to one side of the transparent sheet, the first and second light-controlling members being disposed face to face in such a manner that the respective band-shaped reflective parts cross one another; reflecting an object image displayed on a display unit by a first mirror member, the first mirror member being disposed opposite to the light-controlling panel and having a mirror surface on an inner side thereof; and forming the object image in front of the light-controlling panel through the light-controlling panel.

### Advantageous Effects of Invention

In the optical imaging apparatus and the optical imaging method according to the present invention, since light traveling from the object image (hereinafter, also simply referred to as "object") displayed on the display unit to the light-controlling panel is bent by the mirror member(s), the distance between the light-controlling panel and the object (or the display unit) can be made short, thereby downsizing of the apparatus is achieved and the real image can be displayed at a distance from the light-controlling panel.

In particular, when the light from the object is made to be reflected multiple (n) times by the first and second mirror members, the position of the real image formed in front of the light-controlling panel is at a distance of (n+1) times compared with the conventional case where the real image is formed at a distance equal to the distance between the object and the light-controlling panel.

### BRIEF DESCRIPTION OF THE DRAWINGS

FIG. 1 is an explanatory diagram illustrating an optical imaging apparatus according to a first embodiment of the present invention.
FIG. 2 is an explanatory diagram illustrating a light-controlling panel for use in the optical imaging apparatus.
FIGS. 3 (A) and 3(B) are explanatory diagrams illustrating optical imaging apparatuses according to second and third embodiments of the present invention, respectively.

### DESCRIPTION OF EMBODIMENTS

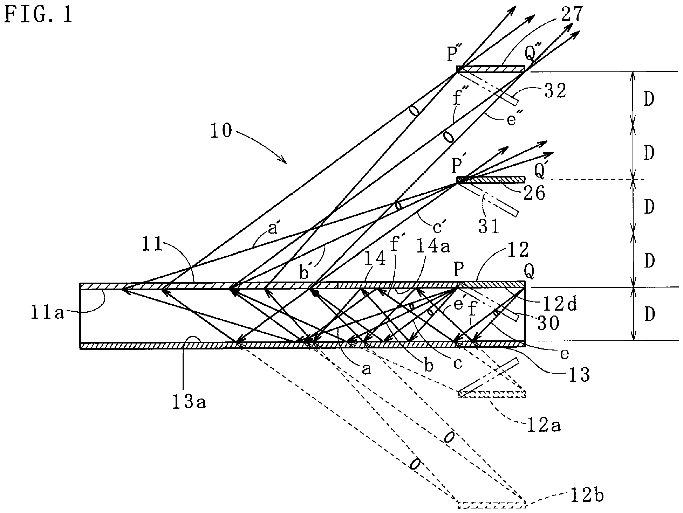

Preferred embodiments of the present invention will now be described hereunder with reference to the accompanying drawings.
As illustrated in FIG. 1, an optical imaging apparatus 10 according to a first embodiment of the present invention includes: a light-controlling panel 11; a display unit 12 for displaying an object image and being disposed at a height position equal to or slightly different from that of the light-controlling panel 11 with a space; a first mirror member 13 disposed behind the light-controlling panel 11 with a constant space therefrom so as to be parallel to the light-controlling panel 11; and a second mirror member 14 disposed (in the space) between the display unit 12 and the light-controlling panel 11 and parallel to the first mirror member 13. In this embodiment, as the display unit 12, a flat screen such as a liquid crystal display (an example of light emitting type displays) is used for description. However, the present invention is also applicable to a case where the display unit 12 is either a flat or three-dimensional object. Moreover, opposing inner sides of the first and second mirror members 13 and 14 are mirror surfaces.
In this embodiment, a light-emitting surface 12d of the display unit 12, a reflective surface 14a of the second mirror member 14, and a light entrance surface 11a of the light-controlling panel 11 are placed in the same plane. Alternatively, however, they may be disposed in planes each having slightly different angles or heights.

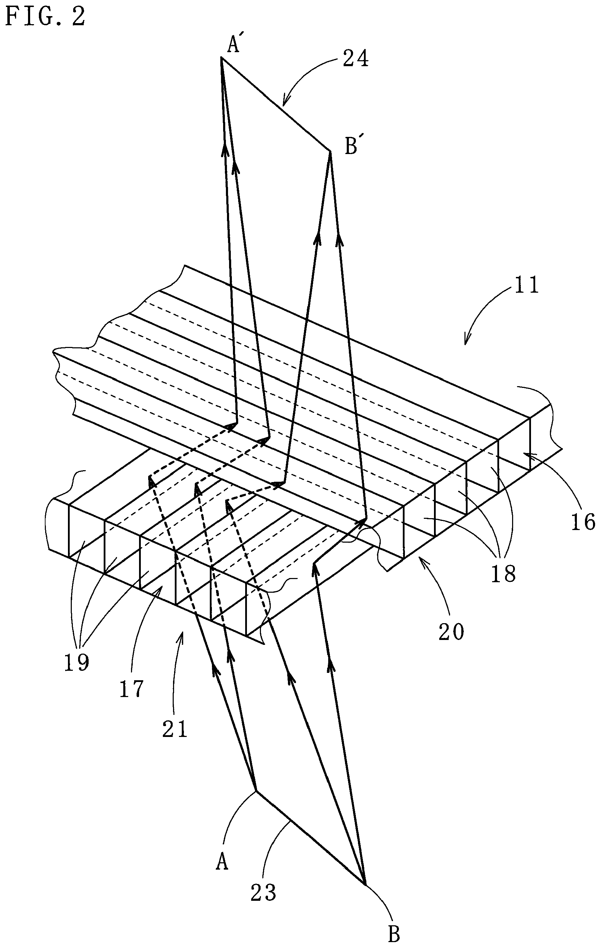

The light-controlling panel 11 is, as illustrated in FIG. 2, identical to the one disclosed in Patent Literature 2 (Japanese Patent Publication No. 4865088), and includes first and second light-controlling members 20 and 21, which respectively have numerous band-shaped reflective parts 18 and 19 and are disposed face to face in such a manner that the respective band-shaped reflective parts 18 and 19 cross one another. The reflective parts 18 and 19 are disposed parallel to one another inside transparent sheets 16 and 17, which are made of glass or transparent plastic, and perpendicular to one sides of the transparent sheets 16 and 17, respectively.
Light emitted from A and B of an object 23 forms a real image 24 at positions A' and B' through the reflective parts 19 and 18.

As illustrated in FIG. 1, the second mirror member 14 is disposed on an extension plane (hereinafter called a reference plane) of the light entrance surface 11a of the light-controlling panel 11. Although the second mirror member 14 can have an arbitrary width (or area), it is preferable that the second mirror member 14 has a width (or area) of about one to four times that of the display unit 12.

The first mirror member 13 is disposed parallel to the second mirror member 14 and the light-controlling panel 11 and at a constant distance D from them. The first mirror member 13 preferably has an area and a shape formed by combining the light-controlling panel 11, the second mirror member 14, and the display unit 12. However, the first mirror member 13 is still operable even if it has an area and a shape formed by combining the light-controlling panel 11 and the second mirror member 14. In other words, the area of the first mirror member 13 is not limited to the above-described area.

Next, operation of the optical imaging apparatus 10 (i.e., an optical imaging method) according to the present embodiment will be described.
When the display unit 12 is, e.g., a liquid crystal display or the like, light is emitted from the entire surface of the display unit 12 which is an object image. In this embodiment, however, description will be made on light emitted from a point P (e.g., one end) on the surface of the display unit 12.
Light rays a, b, and c emitted radially from the point P fall on and are reflected by the first mirror member 13, and enter the light-controlling panel 11, and then are reflected by the reflective parts 18 and 19 of the light-controlling panel 11 to become light rays a', b' and c', and converge at a position P'. Light rays emitted from the other end Q (of the display unit 12) also converge at a position Q' in the same manner. Consequently, a real image 26 of the display unit 12 is formed in front of the light-controlling panel 11.

In this case, since reflection is made once (n=1) by the first mirror member 13, the real image 26 is formed in front of the light-controlling panel 11, at a position that is (n+1)•D from the reference plane.
Thereby, the position of the display unit 12 becomes a virtual image position 12a with respect to the first mirror member 13, resulting in reduction in the total thickness of the optical imaging apparatus 10. In other words, the optical imaging apparatus 10 can be made thinner by an amount D in this embodiment.

Next, when reflection that occurs at the second mirror member 14 is also taken into consideration, the following will take place: i.e., light rays e and f emitted from Q of the display unit 12 are reflected by the first mirror member 13 and further reflected by the second mirror member 14. These light rays are denoted by e' and f'. Thereafter, the light rays e' and f' are reflected by an inner surface (a reflective surface 13a) of the first mirror member 13 and the reflected light rays enter the light-controlling panel 11 and exit the light-controlling panel 11 as light rays e" and f" via the reflective parts 18 and 19 of the light-controlling panel 11, and thereafter converge at Q". At the same time, also as to the point P, light rays converge at P", thereby forming a real image 27 in front of the light-controlling panel 11.

Since reflection occurs three times (n=3), the real image 27 is formed at a position that is (n+1)•D, i.e. 4D, from the reference plane. A reference numeral 12b represents a virtual image position of the display unit 12 with respect to the first mirror member 13.
Accordingly, comparing with the case of one-time reflection, the real image 27 can be formed at a position further away from the reference plane.
If the structure illustrated in FIG. 1 is embodied as an apparatus, the two real images 26 and 27 will be formed. Therefore, when only the real image 26 is to be formed at a double-distance position (position that is 2D from the reference plane), the second mirror member 14 is omitted. Consequently, the display unit 12 is positioned in contact with or closely adjacent to one end of the light-controlling panel 11, and the light from the object image displayed on the display unit 12 is made to be reflected by the first mirror member 13, and by means of the light-controlling panel 11, the object image is formed in front of the light-controlling panel 11.

Meanwhile, when the real image 27 is to be formed only at a quadruple-distance position (position that is 4D from the reference plane), only light rays that have been reflected twice by the first mirror member 13 and once by the second mirror member 14 are needed. Therefore, a light-shielding member or a hood made of an opaque material is disposed to intercept other light rays. In this case, the light-shielding member may be disposed in the middle between the first and second mirror members 13 and 14, or may be disposed before the real image 26 (i.e., in front of the light-controlling panel 11).

Since a real image can be formed at a position that is (n+1)•D from the reference plane, by further increasing the number "n" of times of reflection by the first and second mirror members 13 and 14, the formation position of the real image can be further distanced from the reference plane.

In FIG. 1, a display unit 30 may be bent at a border part between the display unit 30 and the second mirror member 14 so that the planar display unit 30 is disposed tilted with respect to the light entrance surface 11a of the light-controlling panel 11. In this case, inclined real images 31 and 32 are formed in front of the optical imaging apparatus 10. As a matter of course, the second mirror member 14 can be omitted.

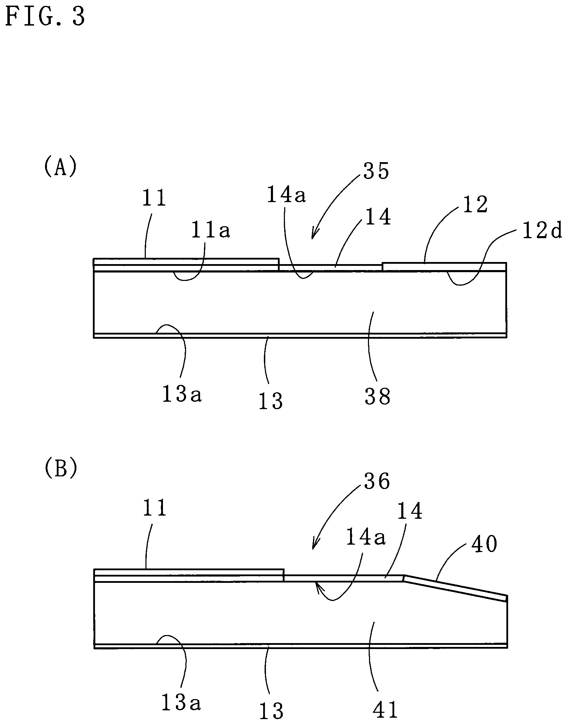

Next, referring to FIGS. 3(A) and 3(B), optical imaging apparatuses 35 and 36 according to second and third embodiments of the present invention will be described. In these embodiments, spaces enclosed by the light-controlling panel 11, the second mirror member 14, the display unit 12, and the first mirror member 13 are replaced with transparent materials (transparent plates) 38 and 41. In other words, the first mirror member 13 is formed on one sides (e.g., undersurfaces) of the plate-shaped transparent materials 38 and 41, and the second mirror member 14 is formed on parts of the other sides (e.g., upper surfaces) of the transparent materials 38 and 41. The first mirror member 13 and the second mirror member 14 are formed by vapor deposition of a metal, such as silver or aluminum, on the surfaces (both sides) of the transparent materials 38 and 41.

In the optical imaging apparatus 35 according to the second embodiment, which is illustrated in FIG. 3(A), the light-controlling panel 11 and the display unit 12 are disposed in contact with or in close adhesion with the other side of the transparent material 38, and the optical imaging apparatus 35 has construction and operation identical to those of the optical imaging apparatus 10 according to the first embodiment. In this embodiment, the transparent material 38 is made of glass (plate) or a transparent plastic plate (the same is true of the transparent material 41).

FIG. 3(B) shows the optical imaging apparatus 36 according to the third embodiment. A difference from the optical imaging apparatus 35 according to the second embodiment is that a display unit 40 is disposed tilted with respect to the light entrance surface 11a of the light-controlling panel 11. In other words, an inclined surface is provided on one side of the plate-shaped transparent material 41, and along the inclined surface, the display unit 40 is disposed. Here, the term "tilted" refers to being inclined at a constant inclination angle with respect to a plane orthogonal to a bend line (border part), which is an angle formed by bending a plane along the linear bend line.

In the optical imaging apparatuses 35 and 36 according to the second and third embodiments, the spaces enclosed by the light-controlling panel 11, the second mirror member 14 (omitted in some cases), and the first mirror member 13 are respectively filled with the transparent materials 38 and 41. Therefore, the apparatuses can be manufactured easily and are strengthened.

The present invention is not limited to the above-described embodiments, and the configuration of the light-controlling panel, the positions of the light-controlling panel and the display unit, and the positions of the first and second mirror members can be varied without changing the gist of the present invention. The mirror member has the mirror surface on one side of the plate-shaped transparent plate. Accordingly, the mirror surface of the mirror member is basically regarded as the reflective surface. Moreover, when total reflection of the substance is employed, the total reflection surface is made to be a mirror surface.
Furthermore, by placing a mirror in front of the light-controlling panel, the formation position of a real image can be changed.

### INDUSTRIAL APPLICABILITY

Since a real image can be formed at a distance from the optical imaging apparatus, downsizing and slimming down of the optical imaging apparatus can be achieved. Therefore, the present invention is applicable not only to normal pad (tablet) type displays, but also to smaller displays of, e.g., mobile phones.

### REFERENCE SIGNS LIST

10: Optical imaging apparatus, 11: Light-controlling panel, 11a: Light entrance surface, 12: Display unit, 12a, 12b: Virtual image position, 12d: Light-emitting surface, 13: First mirror member, 13a: Reflective surface, 14: Second mirror member, 14a: Reflective surface, 16, 17: Transparent sheet, 18, 19: Reflective part, 20: First light-controlling member, 21: Second light-controlling member, 23: Object, 24, 26, 27: Real image, 30: Display unit, 31, 32: Real image, 35, 36: Optical imaging apparatus, 38: Transparent material, 40: Display unit, 41: Transparent material

## Claims

1. An optical imaging apparatus (10), comprising:
a light-controlling panel (11) including first and second light-controlling members (20, 21) each having numerous band-shaped reflective parts (18, 19) disposed parallel to one another inside a transparent sheet (16, 17) and perpendicular to one side of the transparent sheet (16, 17), the first and second light-controlling members (20, 21) being disposed face to face in such a manner that the respective band-shaped reflective parts (18, 19) cross one another;
a display unit (12) for displaying an object image and being disposed with a space from the light-controlling panel (11); and
a first mirror member (13) disposed behind the light-controlling panel (11) with a constant space therefrom so as to be parallel to the light-controlling panel (11);
**characterized in that**
a second mirror member (14) is provided in the space between the display unit (12) and the light-controlling panel (11) so as to be parallel to the first mirror member (13), wherein light from the object image displayed on the display unit (12) is reflected by the first mirror member (13) and further reflected by the second mirror member (14) and reflected again by the first mirror member (13) and the reflected light enters the light control panel (11) and the object image is formed in front of the light-controlling panel (11) by means of the light-controlling panel (11).

2. The optical imaging apparatus as defined in claim 1, wherein the first mirror member (13) and the second mirror member (14) are formed on both sides of a transparent plate.

3. The optical imaging apparatus as defined in claim 1 or 2, wherein a light-emitting surface (12d) of the display unit (12), a reflective surface (14a) of the second mirror member (14), and a light entrance surface (11a) of the light-controlling panel (11) are disposed either in planes each having slightly different angles and heights or in a same plane.

4. The optical imaging apparatus as defined in claim 1, wherein the display unit (12) is disposed tilted with respect to a light entrance surface (11a) of the light-controlling panel (11).

5. The optical imaging apparatus as defined in any one of claims 1 to 4, wherein the display unit (12) is a light emitting type display.

6. An optical imaging method, comprising:
using a light-controlling panel (11) including first and second light-controlling members (20, 21) each having numerous band-shaped reflective parts (18, 19) disposed parallel to one another inside a transparent sheet (16, 17) and perpendicular to one side of the transparent sheet (16, 17), the first and second light-controlling members (20, 21) being disposed face to face in such a manner that the respective band-shaped reflective parts (18, 19) cross one another;
**characterized by**
reflecting an object image displayed on a display unit (12) by a first mirror member (13) and further reflecting the object image reflected by the first mirror member (13) by a second mirror member (14), the first and second mirror members (13, 14) having mirror surfaces on opposing inner sides thereof;
reflecting the object image having been reflected by the first and the second mirror members (13, 14) by the first mirror member (13 again such that it enters the light control panel (11); and
forming the object image in front of the light-controlling panel (11) through the light-controlling panel (11).

7. The optical imaging method as defined in claim 6, wherein a light-emitting surface (12d) of the display unit (12), a reflective surface (14a) of the second mirror member (14), and a light entrance surface (11a) of the light-controlling panel (11) are disposed either in planes each having slightly different angles and heights or in a same plane.

## Patentansprüche

1. Optische Abbildungsvorrichtung (10), mit:
einem Lichtsteuerungspaneel (11) mit einem ersten und einem zweiten Lichtsteuerungselement (20, 21), die jeweils mehrere bandförmige reflektierende Teile (18, 19) aufweisen, die innerhalb einer transparenten Platte (16, 17) parallel zueinander und senkrecht zu einer Seite der transparenten Platte (16, 17) angeordnet sind, wobei das erste und das zweite Lichtsteuerungselement (20, 21) derart einander gegenüberliegend angeordnet sind, dass die jeweiligen bandförmigen reflektierenden Teile (18, 19) einander kreuzen;
einer in einem Abstand vom Lichtsteuerungspaneel (11) angeordneten Displayeinheit (12) zum Darstellen eines Objektbilds; und
einem ersten Spiegelelement (13), das hinter dem Lichtsteuerungspaneel (11) in einem konstanten Abstand davon angeordnet ist, so dass es parallel zum Lichtsteuerungspaneel (11) ist;
**dadurch gekennzeichnet, dass**
ein zweites Spiegelelement (14) in dem Raum zwischen der Displayeinheit (12) und dem Lichtsteuerungspaneel (11) angeordnet ist, so dass es sich parallel zum ersten Spiegelelement (13) erstreckt, wobei Licht von dem auf der Displayeinheit (12) dargestellten Objektbild durch das erste Spiegelelement (13) reflektiert wird und ferner durch das zweite Spiegelelement (14) reflektiert wird und erneut durch das erste Spiegelelement (13) reflektiert wird, und wobei das reflektierte Licht in das Lichtsteuerungspaneel (11) eintritt und das Objektbild mittels des Lichtsteuerungspaneels (11) vor dem Lichtsteuerungspaneel (11) erzeugt wird.

2. Optische Abbildungsvorrichtung nach Anspruch 1, wobei das erste Spiegelelement (13) und das zweite Spiegelelement (14) an beiden Seiten einer transparenten Platte ausgebildet sind.

3. Optische Abbildungsvorrichtung nach Anspruch 1 oder 2, wobei eine lichtemittierende Fläche (12d) der Displayeinheit (12), eine reflektierende Fläche (14a) des zweiten Spiegelelements (14) und eine Lichteintrittsfläche (11a) des Lichtsteuerungspaneels (11) entweder in Ebenen, die jeweils leicht unterschiedliche Winkel und Höhen haben, oder in einer gleichen Ebene angeordnet sind.

4. Optische Abbildungsvorrichtung nach Anspruch 1, wobei die Displayeinheit (12) bezüglich einer Lichteintrittsfläche (11a) des Lichtsteuerungspaneels (11) geneigt angeordnet ist.

5. Optische Abbildungsvorrichtung nach einem der Ansprüche 1 bis 4, wobei die Displayeinheit (12) ein Display vom Lichtemissionstyps ist.

6. Optisches Abbildungsverfahren, mit den Schritten:
Verwenden eines Lichtsteuerungspaneels (11) mit einem ersten und einem zweiten Lichtsteuerungselement (20, 21), die jeweils mehrere bandförmige reflektierende Teile (18, 19) aufweisen, die innerhalb einer transparenten Platte (16, 17) parallel zueinander und senkrecht zu einer Seite der transparenten Platte (16, 17) angeordnet sind, wobei das erste und das zweite Lichtsteuerungselement (20, 21) derart einander zugewandt angeordnet sind, dass die jeweiligen bandförmigen reflektierenden Teile (18, 19) einander kreuzen;
**gekennzeichnet durch**
Reflektieren eines auf einer Displayeinheit (12) dargestellten Objektbildes durch ein erstes Spiegelelement (13) und ferner Reflektieren des durch das erste Spiegelelement (13) reflektierten Objektbildes durch ein zweites Spiegelelement (14), wobei das erste und das zweite Spiegelelement (13, 14) Spiegelflächen auf gegenüberliegenden Innenseiten davon aufweisen;
erneutes Reflektieren des Objektbildes, das durch das erste und das zweite Spiegelelement (13, 14) reflektiert worden ist, durch das erste Spiegelelement (13), so dass es in das Lichtsteuerungspaneel (11) eintritt, und
Erzeugen des Objektbildes durch das Lichtsteuerungspaneel (11) vor dem Lichtsteuerungspaneel (11).

7. Verfahren nach Anspruch 6, wobei eine Lichtemissionsfläche (12d) der Displayeinheit (12), eine reflektierende Fläche (14a) des zweiten Spiegelelements (14) und eine Lichteintrittsfläche (11a) des Lichtsteuerungspaneels (11) entweder in Ebenen, die leicht unterschiedliche Winkel und Höhen haben, oder in einer gleichen Ebene angeordnet sind.

## Revendications

1. Appareil d'imagerie optique (10), comprenant :
un panneau de contrôle de la lumière (11) comprenant un premier et un second éléments de contrôle de la lumière (20, 21) ayant chacun plusieurs parties réfléchissantes en forme de bande (18, 19) disposées parallèlement les unes aux autres à l'intérieur d'une plaque transparente (16, 17) et perpendiculaires à un côté de la plaque transparente (16, 17), le premier et le second éléments de contrôle de la lumière (20, 21) étant disposés face à face de sorte que les parties réfléchissantes respectives en forme de bande (18, 19) se croisent ;
une unité d'affichage (12) destine à afficher une image d'objet et étant disposée avec un espace par rapport au panneau de contrôle de la lumière (11) ; et
un premier élément de miroir (13) disposé derrière le panneau de contrôle de la lumière (11) avec un espace constant par rapport à celui-ci de façon à être parallèle au panneau de contrôle de la lumière (11) ;
**caractérisé en ce que**
un second élément de miroir (14) est prévu dans l'espace entre l'unité d'affichage (12) et le panneau de contrôle de la lumière (11) de façon à être parallèle au premier élément de miroir (13), dans lequel la lumière qui provient de l'image d'objet affichée sur l'unité d'affichage (12) est réfléchie par le premier élément de miroir (13) et est également réfléchie par le second élément de miroir (14) et est réfléchie à nouveau par le premier élément de miroir (13), et la lumière réfléchie pénètre dans le panneau de contrôle de la lumière (11) et l'image d'objet est formée en face du panneau de contrôle de la lumière (11) à l'aide du panneau de contrôle de la lumière (11).

2. Appareil d'imagerie optique selon la revendication 1, dans lequel le premier élément de miroir (13) et le second élément de miroir (14) sont formés des deux côtés d'une plaque transparente.

3. Appareil d'imagerie optique selon la revendication 1 ou 2, dans lequel une surface d'émission de lumière (12d) de l'unité d'affichage (12), une surface réfléchissante (14a) du second élément de miroir (14), et une surface d'entrée de lumière (11a) du panneau de contrôle de la lumière (11) sont disposées soit sur des plans ayant chacun des angles et des hauteurs légèrement différents, soit sur un même plan.

4. Appareil d'imagerie optique selon la revendication 1, dans lequel l'unité d'affichage (12) est disposée en étant inclinée par rapport à une surface d'entrée de lumière (11a) du panneau de contrôle de la lumière (11).

5. Appareil d'imagerie optique selon l'une quelconque des revendications 1 à 4, dans lequel l'unité d'affichage (12) est un écran électroluminescent.

6. Procédé d'imagerie optique, comprenant :
l'utilisation d'un panneau de contrôle de la lumière (11) comprenant un premier et un second éléments de contrôle de la lumière (20, 21) ayant chacun plusieurs parties réfléchissantes en forme de bande (18, 19) disposées parallèlement les unes aux autres à l'intérieur d'une plaque transparente (16, 17) et perpendiculaires à un côté de la plaque transparente (16, 17), le premier et le second éléments de contrôle de la lumière (20, 21) étant disposés face à face de sorte que les parties réfléchissantes en forme de bande respectives (18, 19) se croisent ;
**caractérisé par**
la réflexion d'une image d'objet affichée sur une unité d'affichage (12) par un premier élément de miroir (13), et la réflexion de l'image d'objet réfléchie par le premier élément de miroir (13) par un second élément de miroir (14), le premier et le second éléments de miroir (13, 14) ayant des surfaces de miroir sur les côtés intérieurs opposés de ceux-ci ;
la réflexion de l'image d'objet ayant été réfléchie par le premier et le second éléments de miroir (13, 14) par le premier élément de miroir (13) à nouveau, de sorte qu'elle pénètre dans le panneau de contrôle de la lumière (11) ; et
la formation de l'image d'objet en face du panneau de contrôle de la lumière (11) par le biais du panneau de contrôle de la lumière (11).

7. Procédé d'imagerie optique selon la revendication 6, dans lequel une surface d'émission de lumière (12d) de l'unité d'affichage (12), une surface réfléchissante (14a) du second élément de miroir (14), et une surface d'entrée de lumière (11a) du panneau de contrôle de la lumière (11) sont disposées soit sur des plans ayant chacun des angles et des hauteurs légèrement différents, soit sur un même plan.
